# EUROPEAN PATENT APPLICATION

(11) **EP 4 220 881 A1**
(43) Date of publication of application: **02.08.2023**
(21) Application number: 22154538.7
(22) Date of filing: 01.02.2022
(51) Int. Cl.: H02H 7/085, H02P 1/46, H02P 1/44, H02P 25/04

(54) **A SINGLE-PHASE AC MOTOR WITH A DUPLEX OVERLOAD PROTECTOR**

(71) Applicant: Motor Competence Center Holding Flensburg GmbH, 24941 Flensburg (DE)
(72) Inventor: WEIHRAUCH, Niels Christian, 6330 Padborg (DK)
(74) Representative: Inspicos P/S

(57) **Abstract**

A motor connectable to a single phase AC power supply and forming a hermetic compressor (1), the motor comprising a main circuit and an auxiliary circuit, the main circuit being connected in parallel with the auxiliary circuit, the motor further comprising a winding structure comprising a main winding (4) arranged in the main circuit and an auxiliary winding (5) arranged in the auxiliary circuit, the motor further comprising a rotor arranged to be rotated by a current in the winding structure. To prevent a repeated cycle of disengaging and reengaging the windings and potential damage of windings or other components of the motor, the motor comprises a high power overload protector (HP-OLP) serially with the main winding, and a low power overload protector (LP-OLP) connected in the auxiliary circuit serially with the auxiliary winding.

## Description

### INTRODUCTION

The disclosure relates to a motor connectable to a single-phase AC power supply and forming a hermetic compressor. The motor comprises a main circuit and an auxiliary circuit connected in parallel with the main circuit. The motor further comprises a winding structure comprising a main winding arranged in the main circuit and an auxiliary winding arranged in the auxiliary circuit. A rotor is arranged to be rotated by a current in the winding structure.

### BACKGROUND

Compressor motors of the above kind are widely used in vapour expansion heat pumps and cooling systems including e.g. household refrigerators. In use, such motors are customarily operated by use of a so-called motor starting relay. The relay serves to connect the starting winding to the power source momentarily until the motor comes up to its proper running speed.

Difficulty is sometimes experienced in protecting the motor against excessive and potentially damaging currents. Excessive currents may e.g., damage the windings and typically destroy the compressor motor.

When used in compressors for vapour expansion heat pumps and cooling systems, abnormal operation of the compressor may cause abnormal currents and potentially damage the main or starting winding or the starting relay.

Existing motors typically include an overload protector designed for disengaging the motor at abnormal motor load including at rotor blocking.

However, the protector is designed for disengaging the motor at abnormal motor load including at rotor blocking. In a normal operating situation such motors may stall which leads to a reduced speed (rpm). Typically, the rpm is reduced until a point where a stall torque of the motor is obtained, and the start relay reinstates the start winding. The additional torque provided by the start winding enables increased rpm. When the relay subsequently disengages, the motor may again be overloaded, and the rpm reduces.

This cycle can continue and at a certain point, the windings may melt, and the start capacitor may be overloaded and destroyed.

### SUMMARY

It is an object of the disclosure increase safety and reduce risk of overloading the start relay and the motor windings at abnormal operation of a compressor. For these and other objects, the disclosure, in a first aspect, provides a motor connectable to a single-phase AC power supply and forming a hermetic compressor.

The motor is of the kind mentioned in the introduction, i.e. with a main circuit and an auxiliary circuit, each circuit including a winding arranged to rotate the rotor. The motor additionally comprises a high power overload protector, HP-OLP arranged serially with the main winding and a low power overload protector, LP-OLP, connected in the auxiliary circuit serially with the auxiliary winding.

In known motors with only one single overload protector, the protector is typically comparable to the HP-OLP, and no LP-OLP is provided.

However, the HP-OLP is designed for disengaging the motor at abnormal motor load including at rotor blocking. The load protector is traditionally designed to handle high currents to protect against damage of the main winding. Such motors may stall sequentially in a cycle which can continue until melting of the windings or destruction of other components, e.g., capacitors etc.

Due to the combined HP-OLP and LP-OLP, the LP-OLP may disengage and therefore prevent that the auxiliary winding reengage and thereby stop the cycle and prevent the damage. The LP-OLP is more sensitive and can therefore protect the components of the auxiliary circuit, particularly a start capacitor. Herein, sensitive means sensitive to current, temperature and/or a combination of temperature and current.

Since the motor cannot initiate a new cycle without the start winding, implementation of the LP-OLP will force the motor to block. When that happens, the HP-OLP will activate and stop the current and protect all parts of the motor. Accordingly, the LP-OLP forces the motor to block and thereby forces activation of the HP-OLP and thereby protects the entire motor including the main winding.

The LP-OLP and the HP-OLP may be identical, or at least have the same sensitivity. However, in one embodiment, the LP-OLP is more sensitive than the HP-OLP which means that it deactivates more quickly than the HP-OLP, i.e. a lower current level or temperature level. In another embodiment, the LP-OLP is less sensitive than the HP-OLP which means that it deactivates more slowly than the HP-OLP, i.e. a higher current level or temperature level

Typically, the LP-OLP and the HP-OLP comprises a heater, typically in the form of a resistor in which the current is conducted.

Both the HP-OLP and the LP-OLP have a temperature range where the switch is open and another range wherein the switch is closed.

The LP-OLP may be more sensitive than the HP-OLP which means that the LP-OLP should be heated more quickly than the HP-OLP. Since the current is mainly controlled by the windings, the ohmic resistance of the heater has no practical influence on the current, and therefore, a low ohmic resistance of the heater provides slow heating and a high ohmic resistance of the heater provides fast heating. The LP-OLP therefore has a heater with a high ohmic resistance compared to the HP-OLP and that provides a high sensitivity of the LP-OLP compared to the sensitivity of the HP-OLP.

The HP-OLP may be connected serially with the auxiliary winding in the auxiliary circuit and connected serially with the main winding in the main circuit. In this embodiment, the HP-OLP is placed before the first junction point where the main and auxiliary circuits split, or it is placed after the last junction point where the main and auxiliary circuits merge, i.e. at one of the terminals connected phase and zero to the motor. The advantage of this location of the HP-OLP either before the first junction point or after the last junction point is that the HP-OLP is heated both by the current in the auxiliary winding and the main winding, and further that the HP-OLP, when activated, de-activates both the main and the auxiliary winding.

This location of the HP-OLP also allows the HP-OLP to be designed and inserted in a manner corresponding to the overload protector of motors known in the art.

The LP-OLP is placed in the auxiliary circuit, i.e. after the junction point where the main circuit split from the auxiliary circuit. Further, the LP-OLP becomes protected by the HP-OLP and it may therefore be protected e.g. in case of a blocked rotor, and if the contact points of the LP-OLP should, accidentally weld together, the motor will be able to function, however, in a manner corresponding to motors known in the art, i.e. where the HP-OLP continues operational and protecting for both the main circuit and the auxiliary circuit.

In case of a blocked rotor, the LP-OLP may interrupt the auxiliary circuit while the HP-OLP continues to supply the main winding.

As an alternative to said location of the HP-OLP serially with the auxiliary winding in the auxiliary circuit and serially with the main winding in the main circuit, the HP-OLP may be connected in the main circuit serially with the main winding and in parallel with the auxiliary circuit. By this location, the HP-OLP can be designed specifically for the current in the main winding, and the advantage of this alternative location is that the HP-OLP can be designed independently of the status of a current relay located in the auxiliary circuit and it may operate based on a current in the main winding, only. Further, it could be made more sensitive than if it also conducts current in the auxiliary circuit.

The HP-OLP and the LP-OLP could be combined within one single mutual housing forming an encapsulation about a single space. This has several benefits. Firstly, it allows a combined effect of both the OLP and the LP-OLP heating the single space. The advantage thereof is that the LP-OLP becomes preheated in the single space. In a normal operational situation where the motor is loaded normally, the auxiliary winding is disconnected after start-up. Accordingly, the LP-OLP is not influenced by loading or overloading. During such a normal operation, the HP-OLP is normally heated, i.e. not excessively heated, however, heated. In the single unitary space, this heating also heats the LP-OLP. If the load increases, the heating also increases and the LP-OLP is also heated and becomes ready to disengage more swiftly on overload in the auxiliary winding if the auxiliary winding is re-engaged due to relay activation. The advantage is therefore predominant in slowly increasing loading where auxiliary winding is not yet engaged.

Additionally, the mutual housing allows a simpler assembly procedure, and optionally, it may reduce space.

As an alternative to said mutual housing, the HP-OLP and the LP-OLP may be separated in individual housings forming separate spaces which are thermally isolated from each other.

Even though it is an advantage to preheat the LP-OLP with heating caused by the HP-OLP, the separate spaces may allow a more individual disruption of the main winding and the auxiliary winding and in specific designs enable increased freedom with respect to the HP-OLP and LP-OLP and regarding the design of the main and auxiliary windings.

In one embodiment, the LP-OLP is arranged internally, within the encapsulation of the hermetic compressor, e.g. as an integrated part of the auxiliary winding. In this embodiment, the HP-OLP could be arranged outside the hermetic encapsulation, e.g. forming part of a start relay attached to an outer surface of the hermetic encapsulation.

Both the HP-OLP and the LP-OLP could be a standard type OLP known in the art.

The LP-OLP could be located in a glass or metal enclosed hermetic housing to be build into the hermetic encapsulation of the hermetic compressor. In this setup, the HP-OLP could be a located outside, and the HP-OLP would not need to be hermetic incapsulated in a separate housing.

The HP-OLP and the LP-OLP may share a combined connector for connection to the AC power supply. This may not only facilitate an easier assembly procedure, but it may also ensure correct connection of both OLPs, i.e. when the HP-OLP is correctly connected, the LP-OLP is also correctly connected. This simplifies the testing procedure since the HP-OLP may more typically be activated in a testing procedure.

Said combined connector may be designed such that each of the HP-OLP and the LP-OLP may comprise an input terminal and an output terminal. The output terminals may be electrically insulated towards each other, and the input terminals may be electrically connected to each other to create a common input potential.

Cheaper manufacturing and a more optimal space and easy connectivity are main advantages of such a specific connector structure.

The motor may comprise a current relay, particularly a current relay comprising relay contacts connected in serial with the auxiliary winding, and an anchor movable by a current in the main circuit to move a switch between a closed state where it closes the auxiliary circuit and an open state where it interrupts the auxiliary circuit dependent on a current in the main circuit. Such current relays are typical in compressor motors.

Additionally, the anchor may be moveable by a current in the auxiliary circuit such that the movement of the switch between a closed state where it closes the auxiliary circuit and an open state where it interrupts the auxiliary circuit dependent also on a current in the auxiliary circuit. By this structure, the current in the auxiliary winding supports the closed state, i.e., once the anchor is moved into the closed position, the current in the auxiliary circuit is initiated, and this current increases the magnetic attraction force and maintains the anchor more strongly in that position which provides the closing of the switch. As an effect thereof, the hysteresis in the opening and closing cycle of the switch is enlarged, and chattering can be avoided. This leads to reduced wear on the switch.

As an alternative to said current relay, the motor may comprise a voltage relay comprising relay contacts connected serially with the auxiliary winding in the auxiliary circuit and switchable between a closed state where it closes the auxiliary circuit and an open state where it interrupts the auxiliary circuit dependent on a voltage in the auxiliary circuit.

By this structure, the voltage in the auxiliary winding supports the closed state, i.e. once the relay shifts to the closed position, the voltage in the auxiliary circuit keeps the relay more strongly in that position. As an effect thereof, the hysteresis in the opening and closing cycle of the switch is enlarged, and chattering can be avoided. This leads to reduced wear on the switch.

The motor may further comprise a start-capacitor, CS, inserted serially with the auxiliary winding in the auxiliary circuit.

This location of CS may protect not only the auxiliary winding but also the start capacitor e.g. in case of peak voltages where the LP-OLP may disconnect without disconnection of the HP-OLP. In such cases, the current to the CS and to the auxiliary winding is interrupted.

The motor may further comprise a run-capacitor, CR, inserted in parallel with the relay and the start-capacitor in the auxiliary circuit. This location of CR may protect the auxiliary winding e.g. in case of peak voltages where the LP-OLP may disconnect without disconnection of the HP-OLP. In such cases, the current to the CR and to the auxiliary winding is interrupted.

The motor may further comprise a Positive Temperature Coefficient thermistor, PTC, inserted in parallel with said relay in the auxiliary circuit.

In a second aspect, the disclosure provides a method of operating a motor according to the first aspect of the disclosure. The method comprises starting the motor by applying current to the main circuit and to the auxiliary circuit and loading the motor to a degree where the HP-OLP disconnects at least the main winding, and the LP-OLP disconnects the auxiliary winding.

The method of the second aspect may include any step implicit in view of the motor according to the first aspect of the disclosure.

### BRIEF DESCRIPTION OF DRAWINGS

The disclosure will now be described by way of example with reference to the following figures in which:
Fig. 1 illustrates a diagram of a motor with an electrical potential relay (prior art);
Fig. 2 illustrates a diagram of a motor according to the disclosure; and
Figs. 3 and 4 illustrate diagrams of alternative embodiments of motors according to the disclosure.

### DESCRIPTION OF AN EMBODIMENT

Further scope of applicability of the present disclosure will become apparent from the following detailed description and specific examples. However, the detailed description and specific examples, while indicating preferred embodiments, are given by way of illustration only, since various changes and modifications within the scope of the disclosure will become apparent to those skilled in the art from this detailed description.

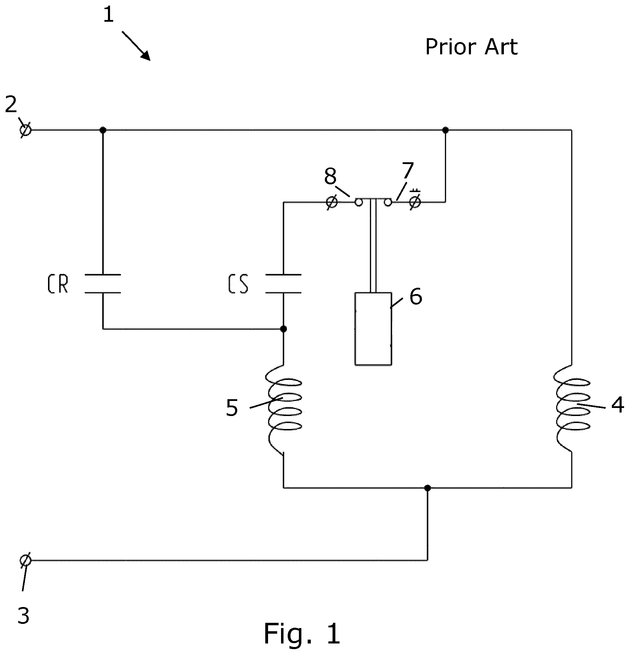

Fig. 1 illustrates a diagram of a single-phase AC asynchronous motor 1 with two phase connectors 2, 3 for connection of the motor to a single-phase power supply. The motor has a rotor (not illustrated) adapted in normal mode to be driven by a main winding 4 and in start-up mode additionally to be driven by an auxiliary winding 5. The main winding is inserted in a main circuit and the auxiliary winding is inserted in an auxiliary circuit.

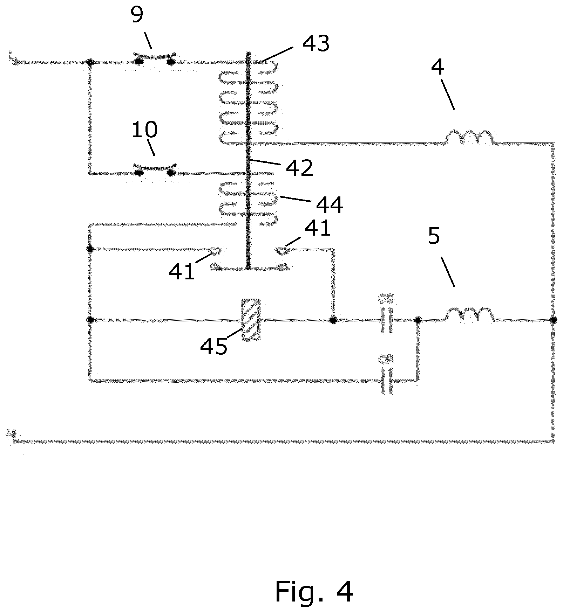

The motor includes a current voltage relay 6 which is arranged to shift between normal mode and start-up mode. Details of the current relay is illustrated in Fig. 4.

The current relay connects or disconnects the first and second connectors 7, 8 controlled by a current in the main winding.

A start capacitor CS is inserted in serial connection with the auxiliary winding to provide a phase shift of a supplied phase.

Motors of this kind are known in the art and generally may suffer from the repeated shifting of the relay during a repeated cycle between an overloaded state and a non-overloaded state. According to these repetitions, contact pads of the relay may suffer, and the winding and other components may eventually wear out. The CR is optional, and the relay which is illustrated as a voltage relay is just an example. In an alternative implementation, the relay is a voltage relay acting on voltage in the main circuit for activating and deactivating the auxiliary winding.

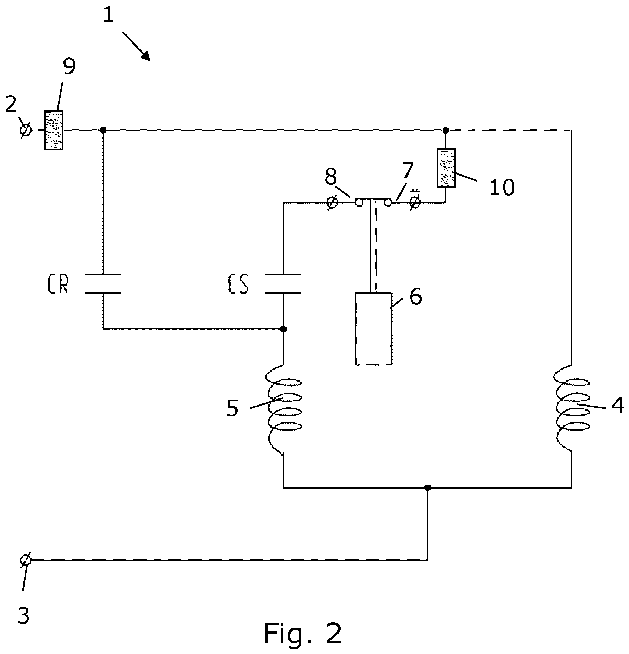

Fig. 2 illustrates a diagram of a motor comprising an HP-OLP 9 serially with the main winding, and an LP-OLP 10 connected in the auxiliary circuit serially with the auxiliary winding.

The illustrated LP-OLP is more sensitive than the HP-OLP, and the illustrated HP-OLP is connected serially with the auxiliary winding in the auxiliary circuit and connected serially with the main winding in the main circuit.

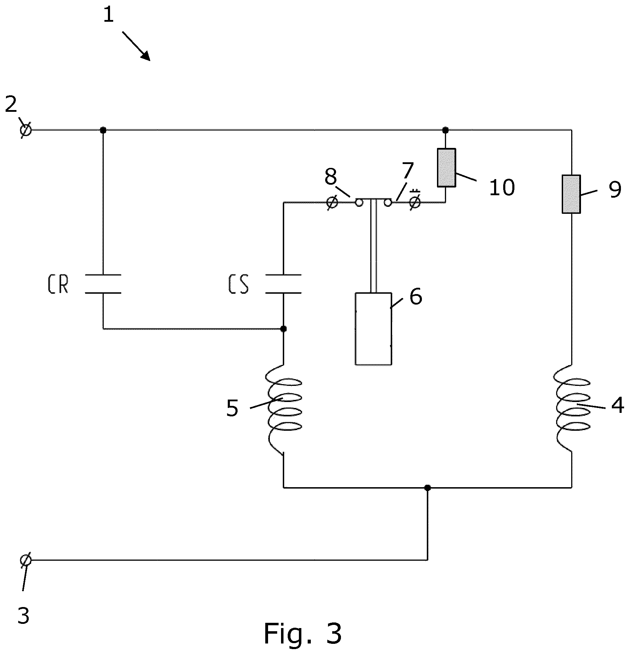

Fig. 3 illustrates an alternative embodiment in which the HP-OLP is connected in the main circuit serially with the main winding and in parallel with the auxiliary circuit.

Fig. 4 illustrates the motor comprising a current relay. The current relay is illustrated in further details, and it comprises relay contacts 41 connected in serial with the auxiliary winding. An anchor 42 is movable by a magnetic field created by a current in the main circuit by the main coil 43. Additionally, the relay comprises an auxiliary coil 44. The current in the auxiliary circuit creates a magnetic field in the auxiliary coil and supports the switch in its closed state.

Fig. 4 additionally illustrates an optional PTC 45 and an alternative implementation of the run capacitor, CR.

## Claims

1. A motor connectable to a single phase AC power supply and forming a compressor (1) within a hermetic encapsulation, the motor comprising a main circuit and an auxiliary circuit, the main circuit being connected in parallel with the auxiliary circuit, the motor further comprising a winding structure comprising a main winding (4) arranged in the main circuit and an auxiliary winding (5) arranged in the auxiliary circuit, the motor further comprising a rotor arranged to be rotated by a magnetic field generated in the winding structure, **characterised in that** the motor comprises a high power overload protector (HP-OLP) serially with the main winding, and a low power overload protector (LP-OLP) connected in the auxiliary circuit serially with the auxiliary winding.

2. The motor according to claim 1, wherein the LP-OLP is more sensitive than the HP-OLP.

3. The motor according to claim 1 or 2, wherein the HP-OLP is connected serially with the auxiliary winding in the auxiliary circuit and connected serially with the main winding in the main circuit.

4. The motor according to claim 1 or 2, wherein the HP-OLP is connected in the main circuit serially with the main winding and in parallel with the auxiliary circuit.

5. The motor according to any of the preceding claims, wherein the HP-OLP and the LP-OLP are combined within a mutual housing forming a single space which is heated by both the HP-OLP and the LP-OLP.

6. The motor according to claim 5, comprising at least one resistive heater arranged in the mutual housing.

7. The motor according to any of claims 1-4, wherein the HP-OLP and the LP-OLP are separated in individual housings forming separate spaces which are thermally isolated from each other.

8. The motor according to any of the preceding claims wherein the LP-OLP is located inside the hermetic encapsulation.

9. The motor according to any of the preceding claims, wherein the HP-OLP is located outside the hermetic encapsulation.

10. The motor according to any of the preceding claims, wherein the HP-OLP and the LP-OLP share a combined connector for connection to the AC power supply.

11. The motor according to claim 10, wherein the combined connector comprises an input terminal and an output terminal for each of the HP-OLP and the LP-OLP, and wherein the output terminals are electrically insulated towards each other, and the input terminals are electrically common connected to each other.

12. The motor according to any of the preceding claims, comprising a current relay comprising relay contacts connected in serial with the auxiliary winding, and an anchor movable by a current in the main circuit to move a switch between a closed state where it closes the auxiliary circuit and an open state where it interrupts the auxiliary circuit dependent on a current in the main circuit, the anchor being influenced by a magnetic field created by a current in the auxiliary circuit.

13. The motor according to any of claims 1-12, comprising a voltage relay comprising relay contacts connected serially with the auxiliary winding in the auxiliary circuit and switchable between a closed state where it closes the auxiliary circuit and an open state where it interrupts the auxiliary circuit dependent on a voltage in the auxiliary circuit.

14. The motor according to any of the preceding claims, further comprising a start-capacitor (CS) inserted serially with the auxiliary winding in the auxiliary circuit.

15. A method of operating a motor according to any of the preceding claims, the method comprising starting the motor by applying current to the main circuit and to the auxiliary circuit and loading the motor to a degree where the HP-OLP disconnects at least the main winding, and the LP-OLP disconnects the auxiliary winding.
